# EUROPEAN PATENT SPECIFICATION

(11) **EP 4 308 280 B1**
(45) Date of publication and mention of the grant of the patent: **06.05.2026**
(21) Application number: 22716059.5
(22) Date of filing: 17.03.2022
(51) Int. Cl.: B01J 8/00, B01J 8/06, G01F 23/00, G05D 9/12

(54) **HYDROCARBON PROCESSING PLANT WITH PLUG SUITABLE TO BE INSERTED INTO A REFILL-OPENING ON A TUBE AND METHOD FORMEASURING CATALYST LEVEL**
KOHLENWASSERSTOFFBEHANDLUNGSANLAGE MIT ZUM EINFÜHREN IN DIE NACHFÜLLÖFFNUNG AN EINEM ROHR GEEIGNETEM STOPFEN UND ANWENDUNG ZUR NIVEAUMESSUNG DES KATALYSATORS
INSTALLATION DE TRAITEMENT D'HYDROCARBURES AVEC BOUCHON ADAPTÉ POUR ÊTRE INSÉRÉ DANS UNE OUVERTURE DE REMPLISSAGE SUR UN TUBE ET METHODE DE MESURE DU NIVEAU DE CATALYSEUR

(30) Priority: 18.03.2021 EP 21382223
(43) Date of publication of application: 24.01.2024
(73) Proprietor: Schmidt + Clemens GmbH + Co. KG, 51789 Lindlar (DE)
(72) Inventor: MUTILVA, Iosu, 31012 Pamplona Navarra (ES); IMÍZCOZ, Pedro, 31240 Ayegui Navarra (ES)
(74) Representative: Hoffmann Eitle
(86) International application number: PCT/EP2022/057055
(87) International publication number: WO 2022/195040

(56) References cited:
- EP-A1- 0 774 796
- WO-A1-2011/073366
- DE-A1- 102007 043 839
- US-A- 5 165 884

## Description

The invention pertains to a hydrocarbon processing plant according to claim 1 that comprises a network of tubes, whereby one tube has a refill-opening and whereby in the one tube a catalyst is arranged. The invention also pertains to a method for determining the level of a catalyst in the one tube of the hydrocarbon processing plant as defined in claim 3.

From the prior art it is known that hydrocarbon processing plants that comprise a network of tubes have one tube that has a refill-opening and has a catalyst arranged in that one tube. Such a hydrocarbon processing plant may have a reformer tube that has a catalyst inside in order to convert the process gas to produce high quantity of hydrogen and carbon monoxide. The catalyst typically allows this gas conversion, whereby the reaction typically is endothermic. Typically the tubes are being heated from the outside. In those areas of the tube, where the catalyst is present, catalysts can help the reaction to take place and for the tube to be cooled down in that area. On the other hand, if the catalyst level drops, areas of tube exist that are without catalyst inside. Such situations may lead to the tube overheating and may lead to a creep degradation that rises exponentially. As an example DE102007043839A1 describes the re-filling of the tubes of a tubular reactor suitable for a petrochemical plant and the measurement of the level reached by the catalyst particles by means of microwaves / radar measurements within the tubes.

A possible cause of the catalyst level to drop can either be the thermal elongation of the one tube, but also can be the catalyst degradation or could be a creep elongation of the one tube. Typically the operators of such hydrocarbon processing plants plan to measure the catalyst level during a shutdown of the hydrocarbon processing plant and plan to fill up the catalyst during such shutdowns. Situations may occur, however, where the catalyst level drops during the operation of the hydrocarbon processing plant and produces damage.

Given this background, the problem to be solved by the invention is to suggest means that allow for the catalyst level in the one tube to be determined online.

This problem is solved by the hydrocarbon processing plant according to claim 1 and the method for determining the level of a catalyst according to claim 3. Preferred embodiments are given in the subordinate claim 2.

The invention is based on the basic idea to have the plug made of a refractory material, preferably of firebrick. It was found out that a plug that is made of a such a material can be permeable to radar waves, which allows the catalyst level to be measured online by way of having radar waves propagate through the material of the plug while the hydrocarbon processing plant is in operation.

The application is directed to a plug suitable to be inserted into a refill-opening on a tube.

It is believed that such a plug is the smallest marketable good that implements the invention. It is expected that existing hydrocarbon processing plants will be refurbished by exchanging existing plugs with plugs according to the invention.

According to the invention, the plug is at least partially, preferably completely made of a refractory material, preferably of firebrick. The wording "is at least partially made of" does not exclude that the plug contains a part that is fully made up of a refractory material and contains other parts that are not made up of a refractory material. It is feasible, for example, for the plug to have a sealing arranged around a central piece, whereby the central piece is made of a refractory material. In a preferred embodiment, of the volume that is taken up by the complete plug, at least 75% of this volume is of a refractory material, preferably at least 80% of this volume is made of a refractory material, preferably 85% of this volume is taken up by refractory material, preferably 90% of this volume is taken up by refractory material, preferably 95% of this volume is taken up by refractory material, preferably 97% or more of this volume is taken up by refractory material.

The material used for the plug is The material used for the plug (3) complies with standard ASTM C 155 in the version of 2018 and/or the standard ASTM C892-05 in the version of Nov. 1, 2005.

In a preferred embodiment, the firebrick used for the plug has a chemical analysis in weight-% of

| | |
|---|---|
| Alumina - Al₂O₃ | 36 to 80 weight-%, preferably 36 to 42 weight-% |
| Silica -SiO₂ | 18 to 55 weight-%, preferably 43 to 55 weight % |
| Ferric Oxide - Fe₂O₃ | 0.2 to 0.8 weight-%, preferably 0.25 to 0.8 weight-% |
| Titanium Oxide - TiO₂ | 0.5 to 1.8 weight-%, preferably 1.4 to 1.8 weight-% |
| Calcium Oxide - CaO | 0.1 to 20 weight-%, preferably 6.0 to 20 weight-% |
| Magnesium Oxide - MgO | 0.05 to 0.15 weight-%, |
| Optionally Alkalies, for example Na₂O or K₂O | 0.1 to 2 weight-%, preferably 0.1 to 0.7 weight-%. |

In a preferred embodiment, the material used for the plug falls under the group number 20 or 23 or 26 or 28 or 30, 32 of the ASTM Standard C155 - 97 as reapproved in 2018. In a preferred embodiment, the material used for the plug falls under the Type 2 or 3 or 4 or 5 of the ASTM C892-05 in the version of Nov. 1, 2005.

The plug is permeable to radar waves. The term "permeable to radar waves" is understood to mean that the intensity of the radar wave as it leaves the plug is more than 40%, preferably more than 50%, preferably more than 60%, preferably more than 70%, probably more than 80% of the intensity of the radar wave as it enters the plug.

A plug of a material that complies with the standard ASTM C155 - 97 as reapproved in 2018 and/or ASTM C892-05 in the version of Nov. 1, 2005 is considered to be a material that is permeable to radar waves.

In a preferred embodiment, the material used for the plug has a density in kg/m³ of less than 1.200, preferably of less than 1000, preferably of less than 900, preferably of less than 800, preferably of less than 650, preferably of less than 500, preferably of less than 400.

In a preferred embodiment, the firebrick used for the plug has a thermal conductivity in W/mk at 600°C of less than 0.7, preferably of less than 0.5, preferably of less than 0.2.

In a preferred embodiment, the refractory material used for the plug is a firebrick made of the material sold under the fact name BNZ-23 or under the product name BNZ-23 HS or under the product name BMZ-23A of BMZ Materials, Inc. of Zelienople, PA, USA.

In a preferred embodiment the plug has an end face that is intended to be arranged most deeply into the refill-opening. In a preferred embodiment, the end face is a plain surface. In a preferred embodiment, the plug has a longitudinal axis. In a preferred embodiment, the end face is a plain surface that is perpendicular to the longitudinal axis of the plug. The end face can also be a conical face. The end face can also be a hemisphere.

In a preferred embodiment, the plug has a top that is intended to be arranged outside of the refill-opening. The top can contain an end disc that protrudes over further elements of the plug and creates a rim.

In a preferred embodiment, the plug has a middle section that is arranged between the end face and the top. In a preferred embodiment, the middle section has the shape of a truncated cone.

In a preferred embodiment, the top has a groove or has a projection that has the geometric shape that allows interaction with a tool. In a preferred embodiment, the top has a slit shaped grooved suitable to interact with a screwdriver. In a preferred embodiment, the top has two grooves that form a cross in order to interact with a Phillips screwdriver. In a preferred embodiment, the top has a square or a polygonal projection that allows interaction with a spanner or a wrench.

In a preferred embodiment, the top has a ring that allows interaction with a hook. In a preferred embodiment, the top has several holes arranged in a pattern that facilitates the top to be gripped by the fingers of a hand or to be gripped by a tool that works similar like the fingers of a hand, like plyers. The holes can for example be arranged in a pattern similar to the pattern on a bowling ball.

The designs described for the top can aid the placement of the plug in the refill-opening on the tube or can aid to pull the plug out of the refill-opening on the tube.

The invention pertains to a hydrocarbon processing plant that comprises a network of tubes, whereby one tube has a refill-opening and whereby in the one tube a catalyst is arranged. The hydrocarbon processing plant according to the invention is characterised in that a plug according to the invention is arranged in the refill-opening and closes the refill-opening.

In a preferred embodiment the hydrocarbon processing plant is a reformer, preferably a steam reformer or is a direct reduction iron (DRI) producing plant.

In a preferred embodiment the catalyst contains aluminium oxide. In a preferred embodiment the catalyst contains nickel. In a preferred embodiment the catalyst contains iron. In a preferred embodiment, the catalyst contains copper. In a preferred embodiment, the catalyst contains ceramics.

The hydrocarbon processing plant comprises a radar emitting device, whereby the radar emitting device is arranged outside the one tube and whereby the radar emitting devices is orientated in such a way that the radar waves emitted by the radar emitting device propagate at least partially through the plug into the direction of the catalyst. Radar emitting devices typically emit radar waves that propagate inside a propagation cone. In a preferred embodiment, the radar emitting device is arranged in such a manner that the plug is at least partially, preferably fully inside the propagation cone.

In a preferred embodiment of the plant, a flange that has a cylindrical portion and a rim portion is arranged on top of the tube and the refill-opening of the tube. In a preferred embodiment, refractory material, for example blankets from refractory material is arranged in the cylindrical portion of the flange. In a preferred embodiment, the flange is closed by a lid. In a preferred embodiment, the lid sits on the rim portion of the flange. In a preferred embodiment the lid is connected to the rim-portion of the flange. The connection can for example be by screws, by clamps or by a bayonet-mechanism.

The method according to the invention is a method for determining the level of a catalyst in the one tube of the hydrocarbon processing plant according to the invention. The method includes having the radar emitting device emit radar waves to propagate through the plug into the direction of the catalyst and to receive an echo of these radar waves by a radar receiving device, whereby the level of the catalyst in the one tube is determined from the echo received by the radar receiving device.

The invention will be further described with reference to figures that only show exemplary embodiments of the invention.
- Fig. 1: shows a sectional view through a portion of a hydrocarbon processing plant according to an embodiment of the invention, the section shown in Fig. 1 among others showing a portion of the network of tubes of the plan and one tube that has a refill-opening;
- Fig. 2: shows a sectional view through a portion of a hydrocarbon processing plant according to a further embodiment of the invention, the section shown in Fig. 2 among others showing a portion of the network of tubes of the plan and one tube that has a refill-opening;
- Fig. 3: shows a sectional side view of a first embodiment of a plug according to the invention;
- Fig. 4: shows a sectional side view of a second embodiment of a plug according to the invention;
- Fig. 5: shows a perspective view of third embodiment of a plug according to the invention and
- Fig. 6: shows a sectional view through the embodiment of the plug as shown in figure 5.

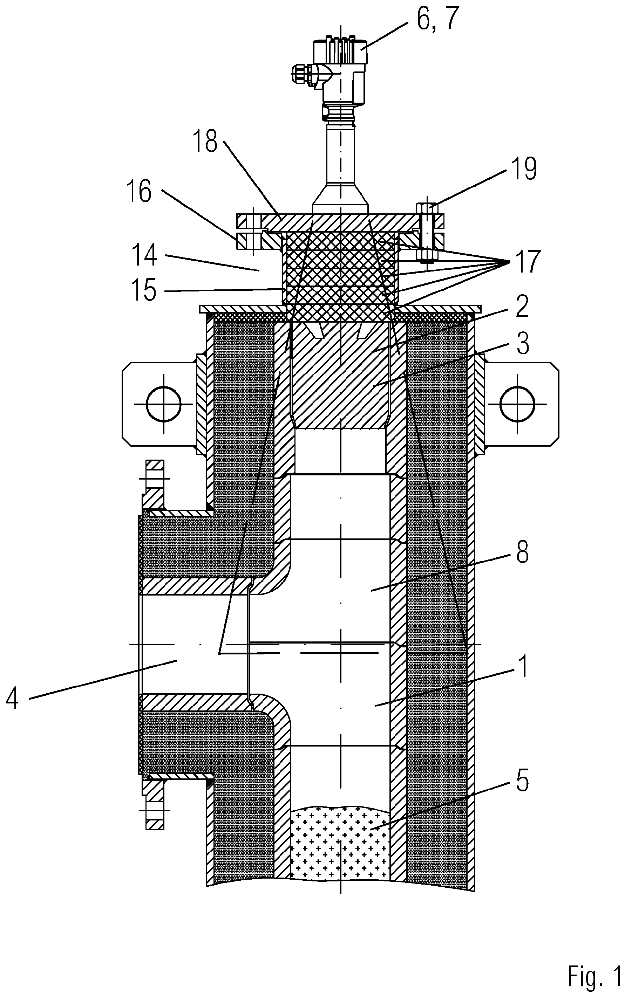

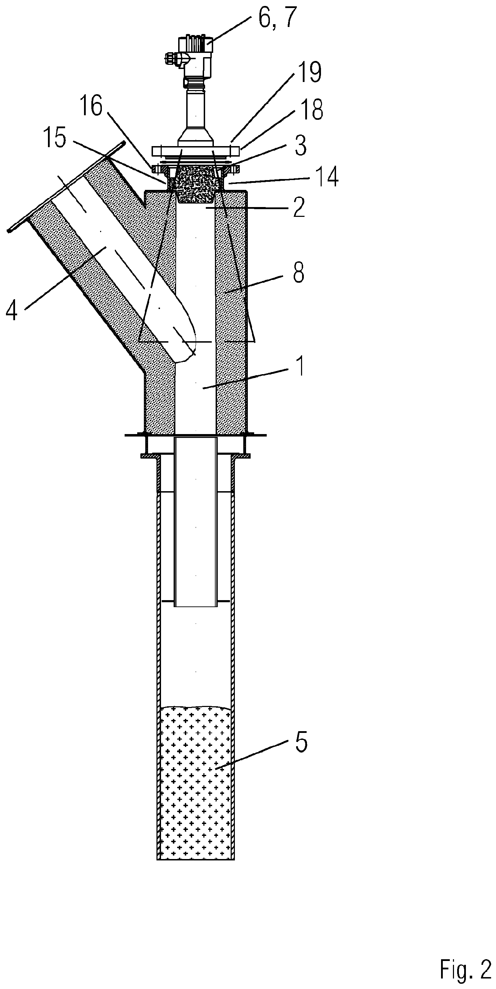

Fig. 1 and 2 show portions of a hydrocarbon processing plant. The portion shown in Fig. 1 and 2 contains one tube 1. The one tube 1 has a refill-opening 2. In the refill-opening 2 a plug 3 is arranged.

A further tube 4 branches of the one tube 1. A catalyst 5 is arranged in the one tube 1.

A radar emitting device 6 that at the same time is a radar receiving device 7 is arranged above the plug 3. The radar emitting device 6 emits radar waves 8 that propagate through the plug 3 into the direction of the catalyst 5. Radar waves 8 reach the catalyst (not shown in Fig. 1 and 2 for reasons of simplicity of the drawings) and are reflected by the catalyst back towards the radar receiving device 7. The radar receiving device 7 hence receives the echo of the radar waves that had been emitted by the radar emitting device 6 and had propagated through the plug 3 to the catalyst 5. From the echo the level of the catalyst in the one tube 1 can be determined.

A flange 14 that has a cylindrical portion 15 and a rim portion 16 is arranged on top of the tube 1 and the refill-opening 2 of the tube 1. Blankets 17 from refractory material is arranged in the cylindrical portion 16 of the flange 14. The flange 14 is closed by a lid 18. The lid 18 sits on the rim portion 16 of the flange 14. The lid 18 is connected to the rim-portion 16 of the flange 14 by screws 19.

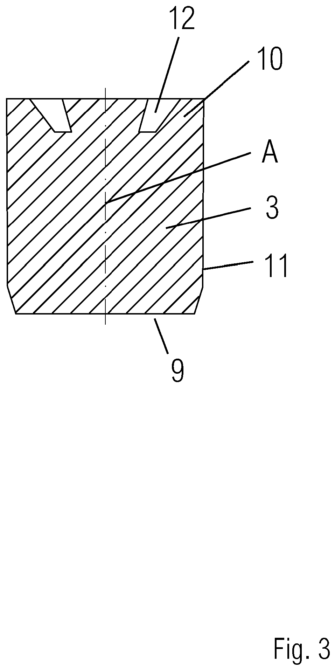

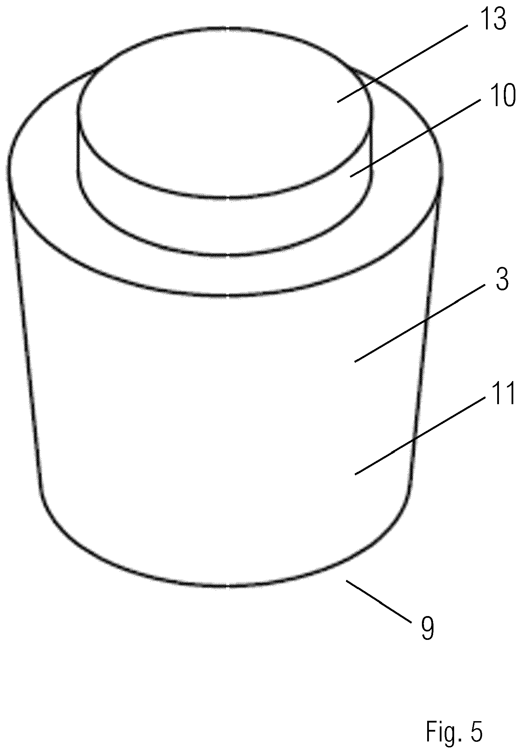

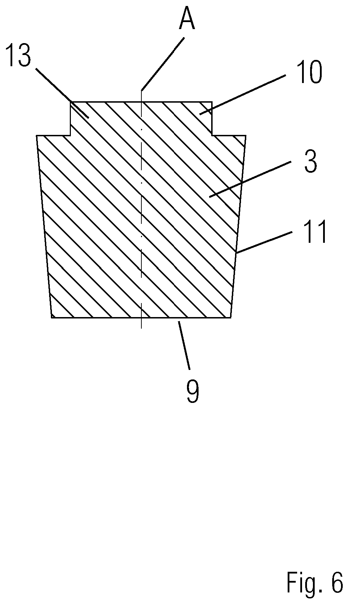

The plugs 3 as shown in the embodiments of Fig. 3, 4, 5 and 6 are made of firebrick, namely of a firebrick that complies with the standard ASTM C155 - 97 as republished in 2018. The plugs 3 are made of the material sold by BNZ Materials, Inc. under the product name BNZ-23. The plug 3 could also be made of a refractory material that uses fibres, especially of a refractory material that complies with the standard ASTM C892-05 in the version of Nov. 1, 2005.

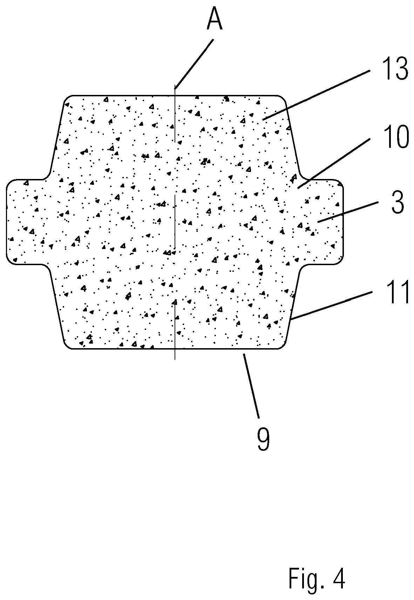

The respective plug 3 has an end face 9 that is intended to be arranged most deeply in the refill-opening 2. The plug 3 has a top 10 intended to be arranged outside the refill-opening 2. Plug 3 has a middle section 11 that is arranged between the end face 9 and the top 10. The middle section in the embodiments shown in Fig. 4, 5 and 6 has the shape of a truncated cone. The middle section in the embodiment shown in Fig. 3 partially has the shape of a truncated cone and partially has the shape of a cylinder. In the embodiment of Fig. 3 the middle section merges into the top 10 for reasons of the middle section partially being of cylindrical shape and the top also partially having a cylindrical outside. The end face 9 is a plain surface that is arranged perpendicular to the longitudinal axis A of the plug 3.

The embodiment shown in Fig. 3 has a top 10 that has a groove 12 that assists engagement with the top 10 in order to pull the plug 3 out of the refill-opening 2. The embodiments shown in Fig. 4 and 5 and 6 show protrusions 13 that can also be used to facilitate the pulling out of the plug 3 out of the refill-opening 2.

A gas mixture, for example a gas mixture of natural gas and steam can be made to propagate through the tube 1 and the further tube 4. The gas mixture can flow from top to bottom or bottom to top depending on the design of the plant. The catalyst 5 assists the reaction between the ingredients of the gas mixture. Energy by way of heat can be brought into the inside of the tube 1 by way of burners (not shown) being arranged around the outside of the tube 1 that heat the tube 1 from the outside.

## Claims

1. Hydrocarbon processing plant that comprises a network of tubes, whereby one tube (1) has a refill-opening (2) and whereby in the one tube (1) a catalyst (5) is arranged, **characterized in that** a plug (3) is arranged in the refill-opening (2) and closes the refill-opening (2), whereby the plug (3) suitable to be inserted into the refill-opening (2) on the tube (1), wherein the plug (3) is at least partially made of a refractory material, wherein the material used for the plug (3) is permeable to radar waves (8), wherein the material used for the plug (3) complies with standard ASTM C 155 in the version of 2018 and/or the standard ASTM C892-05 in the version of Nov. 1, 2005, whereby a radar emitting device (6) is provided, whereby the radar emitting device (6) is arranged outside the one tube (1) and whereby the radar emitting device (6) is orientated in such a way that the radar waves (8) emitted by the radar emitting device (6) propagate through the plug (3) into the direction of the catalyst (5).

2. Hydrocarbon processing plant according to claim 1, **characterized in that** the plug (3) has
• an end face (9) intended to be arranged most deeply into the refill-opening (2),
• a top (10) intended to be arranged outside of the refill-opening (2) and
• a middle section (11) arranged between the end face (9) and the top (10),
whereby the middle section (11) has the shape of a truncated cone.

3. Method for determining the level of a catalyst (5) in the one tube (1) of the hydrocarbon processing plant according to claim 6, **characterized in** having the radar emitting device (6) emit radar waves (8) to propagate through the plug (3) into the direction of the catalyst (5) and to receive an echo of these radar waves (8) by a radar receiving device (7), whereby the level of the catalyst (5) in the one tube (1) is determined from the echo received by the radar receiving device (7).

## Patentansprüche

1. Kohlenwasserstoffbehandlungsanlage, die ein Netzwerk von Rohren umfasst, wobei ein Rohr (1) eine Nachfüllöffnung (2) aufweist und wobei in dem einen Rohr (1) ein Katalysator (5) angeordnet ist, **dadurch gekennzeichnet, dass** ein Stopfen (3) in der Nachfüllöffnung (2) angeordnet ist und die Nachfüllöffnung (2) schließt, wobei der Stopfen (3) dazu geeignet ist, in die Nachfüllöffnung (2) an dem Rohr (1) eingeführt zu werden, wobei der Stopfen (3) zumindest teilweise aus einem feuerfesten Material besteht, wobei das Material, das für den Stopfen (3) verwendet wird, durchlässig für Radarwellen (8) ist, wobei das Material, das für den Stopfen (3) verwendet wird, Norm ASTM C 155 in der Version von 2018 und/oder der Norm ASTM C892-05 in der Version vom 1. Nov. 2005 entspricht, wobei eine Radaremittiervorrichtung (6) bereitgestellt ist, wobei die Radaremittiervorrichtung (6) außerhalb des einen Rohres (1) angeordnet ist und wobei die Radaremittiervorrichtung (6) auf eine solche Weise ausgerichtet ist, dass sich die Radarwellen (8), die durch die Radaremittiervorrichtung (6) emittiert werden, durch den Stopfen (3) in die Richtung des Katalysators (5) ausbreiten.

2. Kohlenwasserstoffbehandlungsanlage nach Anspruch 1, **dadurch gekennzeichnet, dass** der Stopfen (3) Folgendes aufweist
• eine Stirnfläche (9), die dazu vorgesehen ist, am tiefsten in der Nachfüllöffnung (2) angeordnet zu sein,
• eine Oberseite (10), die dazu vorgesehen ist, außerhalb der Nachfüllöffnung (2) angeordnet zu sein, und
• einen mittleren Abschnitt (11), der zwischen der Stirnfläche (9) und der Oberseite (10) angeordnet ist,
wobei der mittlere Abschnitt (11) die Form eines Kegelstumpfes aufweist.

3. Verfahren zum Bestimmen des Niveaus eines Katalysators (5) in dem einen Rohr (1) der Kohlenwasserstoffbehandlungsanlage nach Anspruch 6, **gekennzeichnet durch** das Aufweisen der Radaremittiervorrichtung (6), die Radarwellen (8) emittiert, um sich durch den Stopfen (3) in die Richtung des Katalysators (5) auszubreiten und ein Echo dieser Radarwellen (8) durch eine Radarempfangsvorrichtung (7) zu empfangen, wobei das Niveau des Katalysators (5) in dem einen Rohr (1) aus dem Echo bestimmt wird, das durch die Radarempfangsvorrichtung (7) empfangen wird.

## Revendications

1. Installation de traitement d'hydrocarbures qui comprend un réseau de tubes, dans laquelle un tube (1) a une ouverture de remplissage (2) et dans laquelle dans ce tube (1) est agencé un catalyseur (5), **caractérisée en ce qu'**un bouchon (3) est agencé dans l'ouverture de remplissage (2) et ferme l'ouverture de remplissage (2), dans laquelle le bouchon (3) convient pour être inséré dans l'ouverture de remplissage (2) sur le tube (1), dans laquelle le bouchon (3) est au moins partiellement fabriqué en matériau réfractaire, dans laquelle le matériau utilisé pour le bouchon (3) est perméable aux ondes radar (8), dans laquelle le matériau utilisé pour le bouchon (3) est conforme à la norme ASTM C 155 dans la version de 2018 et/ou à la norme ASTM C892-05 dans la version du 1er novembre 2005, dans laquelle un dispositif d'émission radar (6) est prévu, dans laquelle le dispositif d'émission radar (6) est agencé à l'extérieur du tube (1) et dans laquelle le dispositif d'émission radar (6) est orienté de manière à ce que les ondes radar (8) émises par le dispositif d'émission radar (6) se propagent à travers le bouchon (3) dans la direction du catalyseur (5).

2. Installation de traitement d'hydrocarbures selon la revendication 1, **caractérisée en ce que** le bouchon (3) a
• une face d'extrémité (9) destinée à être disposée le plus profondément dans l'ouverture de remplissage (2),
• une partie supérieure (10) destinée à être disposée à l'extérieur de l'ouverture de remplissage (2) et
• une section médiane (11) disposée entre la face d'extrémité (9) et la partie supérieure (10),
dans laquelle la section médiane (11) présente la forme d'un cône tronqué.

3. Procédé de détermination du niveau d'un catalyseur (5) dans le tube (1) de l'usine de traitement d'hydrocarbures selon la revendication 6, **caractérisé par** l'émission par le dispositif d'émission radar (6) d'ondes radar (8) à propager à travers le bouchon (3) dans la direction du catalyseur (5) et la réception d'un écho de ces ondes radar (8) par un dispositif de réception radar (7), dans lequel le niveau du catalyseur (5) dans le tube (1) est déterminé à partir de l'écho reçu par le dispositif de réception radar (7).
